# EUROPÄISCHE PATENTANMELDUNG

(11) **EP 2 272 346 A1**
(43) Veröffentlichungstag der Anmeldung: **12.01.2011**
(21) Anmeldenummer: 09164916.0
(22) Anmeldetag: 08.07.2009
(51) Int. Cl.: A01N 43/56, B27K 3/40, A01P 3/00

(54) **Penthiopyrad für den Holzschutz**

(71) Anmelder: LANXESS Deutschland GmbH, 51369 Leverkusen (DE)
(72) Erfinder: Koop, Bernd, Dr., 50668 Köln (DE); Kugler, Martin, Dr., 42799 Leichlingen (DE); Vogl, Erasmus, Dr., 51373 Leverkusen (DE)

(57) **Zusammenfassung**

Verwendung von Penthiopyrad der Formel (I) 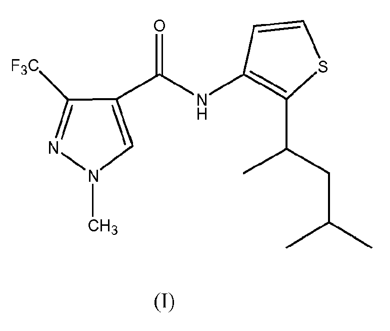 ggf. als Salz oder Säureadditionsverbindung zum Schutz von Holz oder holzhaltigen Materialien vor dem Befall und/oder der Zerstörung durch holzzerstörende Basidiomyceten.

## Beschreibung

Die vorliegende Anmeldung betrifft die Verwendung von Penthiopyrad (N-[2-(1,3-Dimethylbutyl)-3-thienyl]-1-methyl-3-(trifluormethyl)-1H-pyrazol-4-carboxamid) zum Schutz von Holz oder holzhaltigen Materialien vor dem Befall und/oder der Zerstörung durch holzzerstörende Basidiomyceten.

EP-A-737682 beschreibt erstmals die Verwendung von substituierten Thiophenen, u.a. Penthiopyrad, als Fungizide für den Pflanzenschutz.

Die Mitverwendung von Penthiopyrad in Wirkstoffkombinationen für den Pflanzenschutz ist darüber hinaus in W02009/027624, W02009/007233 und W02009/012907 beschrieben.

Die im Holzschutz bislang verwendeten Wirkstoffe decken häufig nur einen Teil der relevanten Schadorganismen ab, so dass in der Praxis oft Kombinationen von Wirkstoffen benutzt werden. Daher besteht ein Bedarf nach Wirkstoffen mit einer möglichst breiten Wirkung.

Aufgabe der vorliegenden Erfindung war es daher, solche Wirkstoffe zu finden.

Es wurde nun überraschend gefunden, dass Penthiopyrad eine besonders gute Wirkung im Holzschutz hat. Dieser Befund ist insbesondere überraschend, da sich einerseits die im Holzschutz relevanten Organismen, insbesondere die holzzerstörenden Basidiomyceten, von den phytopathogenen Pilzen unterscheiden und andererseits der Schutz von Holz oder holzhaltigen technischen Materialien grundlegend andere Anforderungen an die Wirkstoffe bzgl. Stabilität, Auswaschverhalten, Farbigkeit und die Kompatibilität zu den prinzipiell unterschiedlichen Formulierhilfsmitteln stellt.

Dies ist nicht zuletzt wegen der häufig anderen, insbesondere drastischeren Applikationsverfahren der Fall.

Die Erfindung betrifft daher die Verwendung von Penthiopyrad der Formel (I) 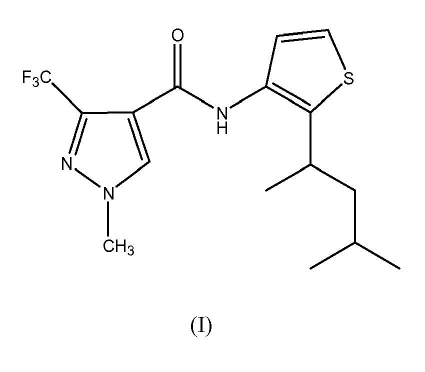 ggf. als Salz oder Säureadditionsverbindung zum Schutz von Holz oder holzhaltigen Materialien vor dem Befall und/oder der Zerstörung durch holzzerstörende Basidiomyceten.

Penthiopyrad kann sowohl als Racemat, in enantiomerenreiner Form oder als angereichertes Enantiomerengemisch eingesetzt werden. Auch eine Verwendung als Salz oder Säureadditionsverbindung ist möglich, wobei unter Salzen insbesondere Natrium-, Kalium-, Magnesium-, Calcium-, Zink-, Aluminium-, Eisen- und Kupfer-Salze verstanden wird und unter Säureadditionsverbindungen insbesondere Addukte mit Halogenwasserstoffsäuren, z.B. Chlorwasserstoff und Bromwasserstoff, Carbonsäuren, wie z.B. Ameisensäure, Essigsäure, Weinsäure und Oxalsäure, Sulfonsäuren, wie z.B. p-Toluolsulfonsäure sowie Schwefelsäure, Phosphorsäure und Salpetersäure verstanden wird.

Unter Holz wird insbesondere verstanden: Bauholz, Holzbalken, Eisenbahnschwellen, Brückenteile, Bootsstege, Holzfahrzeuge, Kisten, Paletten, Container, Telefonmasten, Holzzäune, Holzverkleidungen, Holzfenster und -türen, Tischlerarbeiten und Holzprodukte, die beim Hausbau oder in der Bautischlerei Verwendung finden.

Unter holzhaltigen Materialien werden insbesondere technische Materialien verstanden, insbesondere Holzwerkstoffe oder Holz-Plastik-Verbundstoffe (sogenannte Wood-Plastic-Composites WPC).

Unter Holzwerkstoffen wird insbesondere verstanden: Sperrholz, Spanplatten, Faserplatten, OSB-Platten (oriented strand board) oder Verbundplatten.

Unter Holz-Plastik-Verbundstoff wird insbesondere verstanden: thermoplastisch prozessierbare Verbundwerkstoffe bestehend aus Holz, Kunststoff und Additiven.

Besonders bevorzugt ist Holz.

Besonders bevorzugt im Sinne dieser Erfindung ist der Schutz von Holz.

Besonders überraschend und völlig unerwartet war, dass Penthiopyrad gegen holzzerstörende Basidiomyceten wirkt.

Es seien beispielsweise folgende holzzerstörende Basidiomyceten genannt:
Coniophora, wie Coniophora puteana,
Lentinus, wie Lentinus tigrinus,
Polyporus, wie Polyporus versicolor,
Gloeophyllum, wie Gloeophyllum trabeum,
Poria, wie Poria placenta,
Stereum, wie Stereum sanguinolentum,
Coriolus, wie Coriolus versicolor.
Penthiopyrad kann in den üblichen Formulierungen eingesetzt werden, wie Lösungen, Emulsionen, Suspensionen, Pulver, Schäume, Pasten, Granulate, Aerosole sowie Feinstverkapselungen in polymeren Stoffen.

Solche Formulierungen zum Schutz von technischen Materialien werden in bekannter Weise hergestellt, z.B. durch Vermischen des Wirkstoffes mit Streckmitteln, also flüssigen Lösungsmitteln, unter Druck stehenden verflüssigten Gasen und/oder festen Trägerstoffen, gegebenenfalls unter Verwendung von oberflächenaktiven Mitteln, also Emulgiermitteln und/oder Dispergiermitteln und/oder schaumerzeugenden Mitteln. Im Falle der Benutzung von Wasser als Streckmittel können z.B. auch organische Lösungsmittel als Hilfslösungsmittel verwendet werden. Als flüssige Lösungsmittel kommen im wesentlichen in Frage: Aromaten, wie Xylol, Toluol oder Alkylnaphthaline, chlorierte Aromaten oder chlorierte aliphatische Kohlenwasserstoffe, wie Chlorbenzole, Chlorethylene oder Methylenchlorid, aliphatische Kohlenwasserstoffe, wie Cyclohexan oder Paraffine, z.B. Erdölfraktionen, Alkohole, wie Butanol oder Glycerol sowie deren Ether und Ester, Ketone, wie Aceton, Methylethylketon, Methylisobutylketon oder Cyclohexanon, stark polare Lösungsmittel, wie Dimethylformamid und Dimethylsulfoxid, sowie Wasser. Mit verflüssigten gasförmigen Streckmitteln oder Trägerstoffen sind solche Flüssigkeiten gemeint, welche bei normaler Temperatur und unter normalem Druck gasförmig sind, z.B. Aerosol-Treibgase, wie Halogenkohlenwasserstoffe sowie Butan, Propan, Stickstoff und Kohlendioxid. Als feste Träger kommen in Frage: z.B. natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate. Als feste Trägerstoffe für Granulate kommen in Frage: z.B. gebrochene und fraktionierte natürliche Gesteine wie Calcit, Marmor, Bims, Sepiolit, Dolomit sowie synthetische Granulate aus anorganischem und organischem Mehlen sowie Granulate aus organischem Material wie Sägemehl, Kokosnussschalen, Maiskolben und Tabakstengeln. Als Emulgier- und/oder schaumerzeugende Mittel kommen in Frage: z.B. nichtionische und anionische Emulgatoren, wie Polyoxyethylen-Fettsäureester, Polyoxyethylen-Fettalkoholether, z.B. Alkylarylpolyglycolether, Alkylsulfonate, Alkylsulfate, Arylsulfonate sowie Eiweißhydrolysate. Als Dispergiermittel kommen in Frage: z.B. Ligninsulfitablaugungen und Methylcellulose.

Es können in den Formulierungen zudem Haftmittel wie Carboxymethylcellulose, natürliche und synthetische, pulverige, körnige oder latexförmige Polymere verwendet werden, wie Gummi arabicum, Polyvinylalkohol, Polyvinylacetat, sowie natürliche Phospholipide, wie Kephaline und Lecithine und synthetische Phospholipide. Weitere Additive können mineralische und vegetabile Öle sein.

Es können Farbmittel wie anorganische Pigmente, z.B. Eisenoxid, Titanoxid, Ferrocyanblau, Kupferoxid und organische Farbstoffe, wie Alizarin-, Azo- und Metallphthalocyaninfarbstoffe verwendet werden.

Die Formulierungen enthalten im allgemeinen 0,1 bis 95 Gew.% Wirkstoff, vorzugsweise zwischen 0,5 und 90%.

Penthiopyrad kann als solches oder in Formulierungen verwendet werden, wobei es als einziges Biozid ohne weitere Wirkstoffe oder in Kombination mit bekannten Fungiziden, Bakteriziden oder Insektiziden verwendet werden kann, um so z.B. das Wirkungsspektrum zu verbreitern oder Resistenzentwicklungen vorzubeugen. In vielen Fällen erhält man dabei synergistische Effekte, d.h. die Wirksamkeit der Mischung ist größer als die Wirksamkeit der Einzelkomponenten.

Besonders günstige Mischungspartner sind z.B. die folgenden Verbindungen:
Triazole wie:
   Azaconazol, Bitertanol, Bromuconazol, Cyproconazol, Diclobutrazol, Difenoconazol, Diniconazol, Epoxyconazol, Etaconazol, Fenbuconazol, Fluquinconazol, Flusilazol, Flutriafol, Furconazol, Hexaconazol, Imibenconazol, Ipconazol, Myclobutanil, Metconazol, Penconazol, Propiconazol, Prothioconazol, Simeconazol, Tebuconazol, Tetraconazol, Triadimefon, Triadimenol, Triticonazol und Uniconazol sowie deren Metallsalze und Säureaddukte;
Imidazole wie:
   Clotrimazol, Bifonazol, Climbazol, Econazol, Fenapanil, Imazalil, Isoconazol, Ketoconazol, Lombazol, Miconazol, Pefurazoat, Prochloraz, Triflumizol sowie deren Metallsalze und Säureaddukte;
Pyridine und Pyrimidine wie:
   Ancymidol, Buthiobate, Fenarimol, Mepanipyrin, Nuarimol, Pyroxyfur, Triamirol ;
Succinat-Dehydrogenase Inhibitoren wie:
   Benodanil, Bixafen, Boscalid, Carboxim, Carboximsulfoxid, Cyclafluramid, Fenfuram, Flutanil, Furametpyr, Furcarbanil, Furmecyclox, Mebenil, Mepronil, Methfuroxam, Metsulfovax, Nicobifen, Pyrocarbolid, Oxycarboxin, Shirlan, Seedvax;
Naphthalin-Derivate wie:
   Terbinafine, Naftifine, Butenafine, 3-Chloro-7-(2-aza-2,7,7-trimethyl-oct-3-en-5-in);
Sulfenamide wie:
   Dichlofluanid, Tolylfluanid, Folpet, Fluorfolpet; Captan, Captofol;
Benzimidazole wie:
   Carbendazim, Benomyl, Fuberidazole, Thiabendazole oder deren Salze;
Morpholinderivate wie:
   Aldimorph, Dimethomorph, Dodemorph, Falimorph, Fenpropidin Fenpropimorph, Tridemorph, Trimorphamid und ihre arylsulfonsauren Salze, wie z.B. p-Toluolsulfonsäure und p-Dodecylphenylsulfonsäure;
Benzthiazole wie:
   2-Mercaptobenzothiazol;
Benzthiophendioxide wie:
   Benzo[b]thiophen-S,S-dioxid-carbonsäurecyclohexylamid;
Benzamide wie:
   2,6-Dichloro-N-(4-trifluoromethylbenzyl)-benzamide, Tecloftalam;
Borverbindungen wie:
   Borsäure, Borsäureester, Borax;
Formaldehyd und formaldehydabspaltende Verbindungen wie:
   Benzylalkoholmono-(poly)-hemiformal, n-Butanol-hemiformal, Dazomet, Ethylenglycol-hemiformal, Hexa-hydro-S-triazine, Hexamethylentetramin, N-Hydroxymethyl-N'-methylthioharnstoff, N-Methylolchloracetamid, Oxazolidine, Paraformaldehyd, Taurolin, Tetrahydro-1,3-oxazin, N-(2-Hydroxypropyl)-amin-methanol, Tetramethylol-acetylen-diharnstoff;
Isothiazolinone wie:
   N-Methylisothiazolin-3-on, 5-Chlor-N-methylisothiazolin-3-on, 4,5-Dichloro-N-octylisothiazolin-3-on, 5-Chlor-N-octylisothiazolinon, N-Octyl-isothiazolin-3-on, 4,5-Trimethylen-isothiazolinone, 4,5-Benzisothiazolinone;
Aldehyde wie:
   Zimtaldehyd, Formaldehyd, Glutardialdehyd, β-Bromzimtaldehyd, o-Phthaldialdehyd;
Thiocyanate wie:
   Thiocyanatomethylthiobenzothiazol, Methylenbisthiocyanat;
quartäre Ammoniumverbindungen und Guanidine wie:
   Benzalkoniumchlorid, Benzyldimethyltetradecylammoniumchlorid, Benzyldimethyldodecyl**ammoniumchlorid, Dichlorbenzyl**-dimethyl-alkyl-ammoniumchlorid, Didecyldimethylammoniumchlorid, Dioctyl-dimethyl-ammoniumchlorid, N-Hexadecyl-trimethylammoniumchlorid, 1-Hexadecyl-pyridinium-chlorid, Iminoctadine-tris(albesilate);
Iodderivate wie:
   Diiodmethyl-p-tolylsulfon, 3-Iod-2-propinyl-alkohol, 4-Chlorphenyl-3-iodpropargylformal, 3-Brom-2,3-diiod-2-propenylethylcarbamat, 2,3,3-Triiodallylalkohol, 3-Brom-2,3-diiod-2-propenylalkohol, 3-Iod-2-propinyl-n-butylcarbamat, 3-Iod-2-propinyl-n-hexylcarbamat, 3-Iod-2-propinyl-cyclohexyl-carbamat, 3-Iod-2-propinyl-phenylcarbamat;
Phenole wie:
   Tribromphenol, Tetrachlorphenol, 3-Methyl-4-chlorphenol, 3,5-Dimethyl-4-chlorphenol, Dichlorphen, 2-Benzyl-4-chlorphenol, Triclosan, Diclosan, Hexachlorophen, p-Hydroxybenzoesäureester, o-Phenylphenol, m-Phenylphenol, p-Phenylphenol, 4-(2-tert.-Butyl-4-methyl-phenoxy)-phenol, 4-(2-Isopropyl-4-methyl-phenoxy)-phenol, 4-(2,4-Dimethyl-phenoxy)-phenol und deren Alkali- und Erdalkalimetallsalze;
Mikrobizide mit aktivierter Halogengruppe wie:
   Bronopol, Bronidox, 2-Brom-2-nitro-1,3-propandiol, 2-Brom-4'-hydroxy-acetophenon, 1-Brom-3-chlor-4,4,5,5-tetramethyl-2-imidazoldinone, β-Brom-β-nitrostyrol, Chloracetamid, Chloramin T, 1,3-Dibrom-4,4,5,5-tetrametyl-2-imidazoldinone, Dichloramin T, 3,4-Dichlor-(3H)-1,2-dithiol-3-on, 2,2-Dibrom-3-nitril-propionamid, 1,2-Dibrom-2,4-dicyanobutan, Halane, Halazone, Mucochlorsäure, Phenyl-(2-chlor-cyan-vinyl)sulfon, Phenyl-(1,2-dichlor-2-cyanvinyl)sulfon, Trichlorisocyanursäure;
Pyridine wie:
   1-Hydroxy-2-pyridinthion (und ihre Cu-, Na-, Fe-, M n-, Zn-Salze), Tetrachlor-4-methylsulfonylpyridin, Pyrimethanol, Mepanipyrim, Dipyrithion, 1-Hydroxy-4-methyl-6-(2,4,4-trimethylpentyl)-2(1H)-pyridin;
Methoxyacrylate oder ähnliches wie:
   Azoxystrobin, Dimoxystrobin, Fluoxastrobin, Kresoxim-methyl, Metominostrobin, Orysastrobin, Picoxystrobin, Pyraclostrobin, Trifloxystrobin;
Metallseifen wie:
   Salze der Metalle Zinn, Kupfer und Zink mit höheren Fett-, Harz-, Naphthensäuren und Phosphorsäure wie z.B. Zinn-, Kupfer-, Zinknaphtenat, -octoat, 2-ethylhexanoat, -oleat, -phosphat, -benzoat;
Metallsalze wie:
   Salze der Metalle Zinn, Kupfer, Zink, sowie auch Chromate und Dichromate wie z.B. Kupferhydroxycarbonat, Natriumdichromat, Kaliumdichromat, Kaliumchromat, Kupfersulfat, Kupferchlorid, Kupferborat, Zinkfluorosilikat, Kupferfluorosilikat;
Oxide wie:
   Oxide der Metalle Zinn, Kupfer und Zink wie z.B. Tributylzinnoxid, Cu₂O, CuO, ZnO;
Oxidationsmittel wie:
   Wasserstoffperoxid, Peressigsäure, Kaliumpersulfat;
Dithiocarbamate wie:
   Cufraneb, Ferban, Kalium-N-hydroxymethyl-N'-methyl-dithiobarbamat, Na- oder K-dimethyldithiocarbamat, Mancozeb, Maneb, Metam, Metiram, Thiram, Zineb, Ziram;
Nitrile wie:
   2,4,5,6-Tetrachlorisophthalodinitril, Dinatrium-cyano-dithioimidocarbamat;
Chinoline wie:
   8-Hydroxychinolin und deren Cu-Salze;
sonstige Fungizide und Bakterizide wie:
   Bethozaxin, 5-Hydroxy-2(5H)-furanon; 4,5-Benzdithiazolinon, 4,5-Trimethylendithiazolinon, N-(2-p-Chlorbenzoylethyl)-hexaminiumchlorid, 2-Oxo-2-(4-hydroxy-phenyl)acethydroximsäure-chlorid, Tris-N-(cyclohexyldiazeniumdioxy)-aluminium, N-(Cyclohexyldiazeniumdioxy)-tributylzinn bzw. K-Salze, Bis-N-(cyclohexyldiazeniumdioxy)-kupfer, Iprovalicarb, Fenhexamid, Spiroxamine, Carpropamid, Diflumetorin, Quinoxyfen, Famoxadone, Polyoxorim, Acibenzolar-S-methyl, Furametpyr, Thifluzamide, Methalaxyl-M, Benthiavalicarb, Metrafenone, Cyflufenamid, Tiadinil, Teebaumöl, Phenoxyethanol,
   Ag, Zn oder Cu-haltige Zeolithe allein oder eingeschlossen in polymere Werkstoffe.
Insektizide:
   Abamectin, Acephat, Acetamiprid, Acetoprole, Acrinathrin, Alanycarb, Aldicarb, Aldoxycarb, Aldrin, Allethrin, Alpha-cypermethrin, Amidoflumet, Amitraz, Avermectin, Azadirachtin, Azinphos A, Azinphos M, Azocyclotin,
   Bacillus thuringiensis, Barthrin, 4-Bromo-2(4-chlorphenyl)-1-(ethoxymethyl)-5-(trifluoromethyl)-1H-pyrrole-3-carbonitrile, Bendiocarb, Benfuracarb, Bensultap, Betacyfluthrin, Bifenthrin, Bioresmethrin, Bioallethrin, Bistrifluron, Bromophos A, Bromophos M, Bufencarb, Buprofezin, Butathiophos, Butocarboxin, Butoxycarboxim,
   Cadusafos, Carbaryl, Carbofuran, Carbophenothion, Carbosulfan, Cartap, Chinomethionat, Cloethocarb, 4-Chlor-2-(2-chlor-2-methylpropyl)-5-[(6-iod-3-pyridinyl)methoxy]-3(2H)- pyridazinone (CAS-RN: 120955-77-3), Chlordane, Chlorethoxyfos, Chlorfenapyr, Chlorfenvinphos, Chlorfluazuron, Chlormephos, N-[(6-Chloro-3-pyridinyl)-methyl]-N'-cyano-N-methyl-ethanimidamide, Chlorpicrin, Chlorpyrifos A, Chlorpyrifos M, Cis-Resmethrin, Clocythrin, Clothiazoben, Cypophenothrin Clofentezin, Coumaphos, Cyanophos, Cycloprothrin, Cyfluthrin, Cyhalothrin, Cyhexatin, Cypermethrin, Cyromazin,
   Decamethrin, Deltamethrin, Demeton M, Demeton S, Demeton-S-methyl, Diafenthiuron, Dialiphos, Diazinon, 1,2-Dibenzoyl-1(1,1-dimethyl)-hydrazin, DNOC, Dichlofenthion, Dichlorvos, Dicliphos, Dicrotophos, Difethialone, Diflubenzuron, Dimethoat, 3,5-Dimethylphenyl-methylcarbamat, Dimethyl-(phenyl)-silyl-methyl-3-phenoxybenzylether, Dimethyl-(4-Ethoxyphenyl)-silylmethyl-3-phenoxybenzylether, Dimethylvinphos, Dioxathion, Disulfoton,
   Eflusilanate, Emamectin, Empenthrin, Endosulfan, EPN, Esfenvalerat, Ethiofencarb, Ethion, Etofenprox, Etrimphos, Etoxazole, Etobenzanid,
   Fenamiphos, Fenazaquin, Fenbutatinoxid, Fenfluthrin, Fenitrothion, Fenobucarb, Fenothiocarb, Fenoxycarb, Fenpropathrin, Fenpyrad, Fenpyroximat, Fensulfothion, Fenthion, Fenvalerate, Fipronil, Flonicamid, Fluacrypyrim, Fluazuron, Flucycloxuron, Flucythrinate, Flufenerim, Flufenoxuron, Flupyrazofos, Flufenzine, Flumethrin Flufenprox, Fluvalinate, Fonophos, Formethanate, Formothion, Fosmethilan Fosthiazat, Fubfenprox, Furathiocarb,
   Halofenocid, HCH (CAS RN: 58-89-9), Heptenophos, Hexaflumuron, Hexythiazox, Hydramethylnon, Hydroprene,
   Imidacloprid, Imiprothrin, Indoxycarb, Iodfenfos, Iprinomectin, Iprobenfos, Isazophos, Isoamidophos, Isofenphos, Isoprocarb, Isoprothiolane, Isoxathion, Ivermectin, Lama-cyhalothrin, Lufenuron,
   Kadedrin,
   Lambda-Cyhalothrin, Lufenuron,
   Malathion, Mecarbam, Mervinphos, Mesulfenphos, Metaldehyd, Methacrifos, Methamidophos, Methidathion, Methiocarb, Methomyl, Metalcarb, Milbemectin, Monocrotophos, Moxiectin,
   Naled, NI 125, Nicotin, Nitenpyram, Noviflumuron,
   Omethoat, Oxamyl, Oxydemethon M, Oxydeprofos,
   Parathion A, Parathion M, Penfluron, Permethrin, 2-(4-Phenoxyphenoxy)-ethyl-ethylcarbamat, Phenthoat, Phorat, Phosalon, Phosmet, Phosphamidon, Phoxim, Pirimicarb, Pirimiphos M, Pirimiphos A, Prallethrin, Profenophos, Promecarb, Propaphos, Propoxur, Prothiophos, Prothoat, Pymetrozin, Pyrachlophos, Pyridaphenthion, Pyresmethrin, Pyrethrum, Pyridaben, Pyridalyl, Pyrimidifen, Pyriproxifen, Pyrithiobac-natrium
   Quinalphos,
   Resmethrin, Rotenone,
   Salithion, Sebufos, Silafluofen, Spinosad, Spirodiclofen, Spiromesifen, Sulfotep, Sulprofos,
   Tau-fluvalinate, Taroils, Tebufenozide, Tebufenpyrad, Tebupirimphos, Teflubenzuron, Tefluthrin, Temephos, Terbam, Terbufos, Tetrachlorvinphos, Tetramethrin, Tetramethacarb, Thiacloprid, Thiafenox, Thiamethoxam, Thiapronil, Thiodicarb, Thiofanox, Thiazophos, Thiocyclam, Thiomethon, Thionazin, Thuringiensin, Tralomethrin, Transfluthrin, Triarathen, Triazophos, Triazamate, Triazuron, Trichlorfon, Triflumuron, Trimethacarb,
   Vamidothion, Xylylcarb, Zetamethrin;
Herbizide und Algizide:
   Acetochlor, Acifluorfen, Aclonifen, Acrolein, Alachlor, Alloxydim, Ametryn, Amidosulfuron, Amitrole, Ammonium sulfamate, Anilofos, Asulam, Atrazine, Azafenidin, Aziptrotryne, Azimsulfuron,
   Benazolin, Benfluralin, Benfuresate, Bensulfuron, Bensulfide, Bentazone, Benzofencap, Benzthiazuron, Bifenox, Bispyribac, Bispyribac-Natrium, Borax, Bromacil, Bromobutide, Bromofenoxim, Bromoxynil, Butachlor, Butamifos, Butralin, Butylate, Bialaphos, Benzoyl-prop, Bromobutide, Butroxydim,
   Carbetamide, Carfentrazone-ethyl, Carfenstrole, Chlomethoxyfen, Chloramben, Chlorbromuron, Chlorflurenol, Chloridazon, Chlorimuron, Chlornitrofen, Chloroacetic acid, Chloransulam-methyl, Cinidon-ethyl, Chlorotoluron, Chloroxuron, Chlorpropham, Chlorsulfuron, Chlorthal, Chlorthiamid, Cinmethylin, Cinofulsuron, Clefoxydim, Clethodim, Clomazone, Chlomeprop, Clopyralid, Cyanamide, Cyanazine, Cybutryne, Cycloate, Cycloxydim, Chloroxynil, Clodinafop-propargyl, Cumyluron, Clometoxyfen, Cyhalofop, Cyhalofop-butyl, Clopyrasuluron, Cyclosulfamuron,
   Diclosulam, Dichlorprop, Dichlorprop-P, Diclofop, Diethatyl, Difenoxuron, Difenzoquat, Diflufenican, Diflufenzopyr, Dimefuron, Dimepiperate, Dimethachlor, Dimethipin, Dinitramine, Dinoseb, Dinoseb Acetate, Dinoterb, Diphenamid, Dipropetryn, Diquat, Dithiopyr, Diuron, DNOC, DSMA, 2,4-D, Daimuron, Dalapon, Dazomet, 2,4-DB, Desmedipham, Desmetryn, Dicamba, Dichlobenil, Dimethamid, Dithiopyr, Dimethametryn,
   Eglinazine, Endothal, EPTC, Esprocarb, Ethalfluralin, Ethidimuron, Ethofumesate, Ethobenzanid, Ethoxyfen, Ethametsulfuron, Ethoxysulfuron,
   Fenoxaprop, Fenoxaprop-P, Fenuron, Flamprop, Flamprop-M, Flazasulfuron, Fluazifop, Fluazifop-P, Fuenachlor, Fluchloralin, Flufenacet Flumeturon, Fluorocglycofen, Fluoronitrofen, Flupropanate, Flurenol, Fluridone, Flurochloridone, Fluroxypyr, Fomesafen, Fosamine, Fosametine, Flamprop-isopropyl, Flamprop-isopropyl-L, Flufenpyr, Flumiclorac-pentyl, Flumipropyn, Flumioxzim, Flurtamone, Flumioxzim, Flupyrsulfuron-methyl, Fluthiacet-methyl,
   Glyphosate, Glufosinate-ammonium
   Haloxyfop, Hexazinone,
   Imazamethabenz, Isoproturon, Isoxaben, Isoxapyrifop, Imazapyr, Imazaquin, Imazethapyr, Ioxynil, Isopropalin, Imazosulfuron, Imazomox, Isoxaflutole, Imazapic,
   Ketospiradox,
   Lactofen, Lenacil, Linuron,
   MCPA, MCPA-hydrazid, MCPA-thioethyl, MCPB, Mecoprop, Mecoprop-P, Mefenacet, Mefluidide, Mesosulfuron, Metam, Metamifop, Metamitron, Metazachlor, Methabenzthiazuron, Methazole, Methoroptryne, Methyldymron, Methylisothiocyanate, Metobromuron, Metoxuron, Metribuzin, Metsulfuron, Molinate, Monalide, Monolinuron, MSMA, Metolachlor, Metosulam, Metobenzuron,
   Naproanilide, Napropamide, Naptalam, Neburon, Nicosulfuron, Norflurazon, Natriumchlorat,
   Oxadiazon, Oxyfluorfen, Oxysulfuron, Orbencarb, Oryzalin, Oxadiargyl,
   Propyzamide, Prosulfocarb, Pyrazolate, Pyrazolsulfuron, Pyrazoxyfen, Pyribenzoxim, Pyributicarb, Pyridate, Paraquat, Pebulate, Pendimethalin, Pentachlorophenol, Pentoxazone, Pentanochlor, Petroleum oils, Phenmedipham, Picloram, Piperophos, Pretilachlor, Primisulfuron, Prodiamine, Profoxydim, Prometryn, Propachlor, Propanil, Propaquizafob, Propazine, Propham, Propisochlor, Pyriminobac-methyl, Pelargonsäure, Pyrithiobac, Pyraflufen-ethyl,
   Quinmerac, Quinocloamine, Quizalofop, Quizalofop-P, Quinchlorac,
   Rimsulfuron
   Sethoxydim, Sifuron, Simazine, Simetryn, Sulfosulfuron, Sulfometuron, Sulfentrazone, Sulcotrione, Sulfosate,
   Teeröle, TCA, TCA-Natrium, Tebutam, Tebuthiuron, Terbacil, Terbumeton, Terbuthylazine, Terbutryn, Thiazafluoron, Thifensulfuron, Thiobencarb, Thiocarbazil, Tralkoxydim, Triallate, Triasulfuron, Tribenuron, Triclopyr, Tridiphane, Trietazine, Trifluralin, Tycor, Thdiazimin, Thiazopyr, Triflusulfuron,
   Vernolate.

Die Anwendungskonzentrationen der erfindungsgemäßen Wirkstoffe richten sich nach der Art und dem Vorkommen der zu bekämpfenden Mikroorganismen sowie nach der Zusammensetzung des zu schützenden Materials. Die optimale Einsatzmenge kann durch Testreihen ermittelt werden. Im Allgemeinen liegen die Anwendungskonzentrationen im Bereich von 0,001 bis 5 Gewichts%, vorzugsweise von 0,005 bis 1,0 Gewichts% des Wirkstoffes, bezogen auf das zu schützende Material.

Die Erfindung betrifft insbesondere ein Verfahren zum Schutz von Holz oder holzhaltigen Materialien, **dadurch gekennzeichnet, dass** man das Holz oder das holzhaltige Material mit Penthiopyrad und mindestens einem Verdünnungs- oder Lösungsmittel ggf. weiteren Hilfs- und Zusatzstoffen sowie ggf. einem oder mehreren Wirkstoffen durch Streichen, Sprühen, Tränken, Tauchen, Imprägnieren oder in sonstiger Art und Weise behandelt. Bevorzugt sind großtechnische Imprägnierverfahren wie das Vakuum-, Doppelvakuum-, Vakuumdruck- oder Druckverfahren.

Es gibt eine Vielzahl von Verfahren zur Behandlung von Holz und holzhaltigen Materialien mit Schutzmitteln. Folgende Verfahren können erfindungsgemäß eingesetzt werden, es gibt aber noch weitere, die in der Praxis Verwendung finden.

Streichen ist ein bevorzugtes Verfahren zum Aufbringen des Holzschutzmittels. Um die erforderlichen Einbringmengen zu erreichen, sind meist mehrere Arbeitsgänge nötig. Es können sowohl wasser- als auch lösungsmittelbasierte Holzschutzmittel verwendet werden. Die Retention, d.h. die vom Holz aufgenommene Menge an Holzschutzmittel, liegt bei vorzugsweise 60-200 g/m². Durch Spritzen und Sprühen erreicht man ähnliche Eindringtiefen und Retentionen wie beim Streichen.

Beim Tauchen wird das Holz vorzugsweise in einem Becken für einige Sekunden bis Minuten vollständig in das Holzschutzmittel eingetaucht. Dabei ist die Aufnahme des Schutzmittels u.a. abhängig von der Konzentration und von der Tauchzeit. Die Eindringtiefen, die man beim Tauchen erreicht, entsprechen in etwa denen beim Streichen. Dieses Verfahren wird z.B. bei Fenstern und Türen angewendet. Die Holzfeuchte sollte zu Beginn der Behandlung unter 30% liegen. Die erreichbaren Retentionen an Holzschutzmittel liegen vorzugsweise bei 100-500 g/m².

Die Trogtränkung ist ein spezielles Tauchverfahren. Dabei wird das Holz vorzugsweise für mehrere Stunden bis Tage untergetaucht, wodurch ein gleichmäßiges und tiefes Eindringen erreicht wird. Es kann dabei auch Holz mit einer Holzfeuchte über 30 %, vorzugsweise bis 50 % imprägniert werden.

Im industriellen Holzschutz werden vorzugsweise Druckverfahren angewendet, um eine möglichst gleichmäßige und tiefe Verteilung des Schutzmittels zu erreichen. Bei der Kesseldruckimprägnierung wird das Holz in einem zylinderförmigen Kessel behandelt. In Abhängigkeit von der Holzart, dem Verwendungszweck, der Holzfeuchte, dem verwendeten Holzschutzmittel und der gewünschten Eindringtiefe werden verschiedene Verfahren eingesetzt. Den besten Schutz erreicht man beim Volltränkverfahren. Dabei wird zunächst ein Vakuum angelegt und anschließend das Holzschutzmittel mit hohem Druck in das Holz gepresst. So können sehr hohe Aufnahmemengen erreicht werden. Mit diesem Verfahren kann trockenes bis halbtrockenes Holz (Feuchtegehalt <30%) imprägniert werden, es werden Retentionen an Holzschutzmittel von 200-700 kg/m³ erreicht.

Das Spartränkverfahren (z.B. das Lowry-Verfahren) wird vorzugsweise für leicht imprägnierbare Holzarten verwendet. Bei diesem Verfahren wird vorzugsweise kein Vorvakuum angelegt, sondern gleich die Schutzmittellösung mit Druck ins Holz gepresst. Nach der Druckphase wird vorzugsweise durch die komprimierte Luft ein Teil des Holzschutzmittels wieder aus dem Holz gedrückt. Die erreichbare Retention ist im Allgemeinen kleiner als beim Volltränkverfahren.

Mit dem Wechseldruckverfahren wird vorzugsweise Holz mit einer Feuchte größer 80% getränkt. Dabei wird der Kessel ohne Vorvakuum mit dem Holzschutzmittel geflutet. Nach einer Vordruckphase, die ca. 30-60 min dauert, beginnen dynamische Druckwechsel. In kurzen Abständen folgen vorzugsweise Vakuum- und Druckphasen aufeinander.

Das Doppelvakuumverfahren wird vorzugsweise zur Imprägnierung von trockenem Holz verwendet, z.B. für Fenster, Türen oder auch Bauholz. Dabei wird der Kessel in einem ersten Schritt vorzugsweise evakuiert, dann wird der Kessel mit dem Holzschutzmittel geflutet und bei Normaldruck getränkt. Anschließend wird vorzugsweise wieder Vakuum angelegt, um überschüssige Lösung zu entfernen. Es können sowohl lösungsmittel- als auch wasserbasierte Holzschutzmittel verwendet werden. Die Retention an Holzschutzmittel liegt bei diesem Verfahren vorzugsweise bei 20-40 kg/m³.

Mit Penthiopyrad ggf. in Form einer Formulierung geschützte Holz-Plastik-Verbundstoffe können bspw. dadurch hergestellt werden, dass man Holzpartikel, ein thermoplastisches Polymer und Penthiopyrad ggf. in Form einer Formulierung und ggf. Formulierhilfsmittel unter thermischer Energie vermischt, insbesondere extrudiert oder spritzgießt.

Holzwerkstoffe können beispielsweise mit dem Leimuntermischverfahren behandelt werden. Dabei wird das Penthiopyrad ggf. in Form einer Formulierung der Leimflotte beigegeben und dieser biozidausgerüstete Leim wie üblich auf die Späne aufgebracht, insbesondere aufgedüst (z.B. bei Span- oder OSB-Platten) oder über Walzen auf die Furniere aufgebracht (z.B. bei Sperrholz). Beim Oberflächenverfahren wird das Penthiopyrad ggf. in Form einer Formulierung auf den Holzwerkstoff aufgesprüht oder mit einer Walze aufgetragen.

### Beispiele:

### Beispiel 1: Hemmtest an Riesenkolonien von holzzerstörenden Basidiomyceten

Aus Kolonien von Coniophora puteana, Poria placenta, Lentinus tigrinus, Coriolus versicolor und Stereum sanguinolentum wurden Mycelstücke ausgestochen und auf einem Agarnährboden bei 26°C inkubiert. Die Hemmung des Hyphenwachstums auf wirkstofflialtigen Nährboden wurden mit dem Längenwachstum ohne Wirkstoffzusatz verglichen und als prozentuale Hemmung bonitiert (Inkubationszeit: ca. 1 Woche, abhängig von dem Pilzwachstum der Vergleichsprobe ohne Wirkstoff). Die Konzentration an Penthiopyrad betrug 6 ppm, einer für Screening-Tests üblichen Konzentration.

| **Nr.** | **Pilz** | **Hemmung [%]** |
|---|---|---|
| 1 | Coniophora puteana | 100 |
| 2 | Coriolus versicolor | 100 |
| 3 | Lentinus tigrinus | 100 |
| 4 | Poria placenta | 100 |
| 5 | Stereum sanguinolentum | 100 |

## Patentansprüche

1. Verwendung von Penthiopyrad der Formel (I) 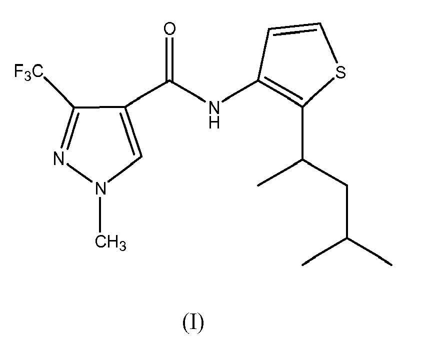 ggf. als Salz oder Säureadditionsverbindung zum Schutz von Holz oder holzhaltigen Materialien vor dem Befall und/oder der Zerstörung durch holzzerstörende Basidiomyceten.

2. Verwendung gemäß Anspruch 1, **dadurch gekennzeichnet, dass** Penthiopyrad in Kombination mit wenigstens einem weiteren mikrobiziden Wirkstoff eingesetzt wird.

3. Verfahren zum Schutz von Holz oder holzhaltigen Materialien, **dadurch gekennzeichnet, dass** man das Holz oder das holzhaltige Material mit Penthiopyrad und mindestens einem Verdünnungs- oder Lösungsmittel ggf. weiteren Hilfs- und Zusatzstoffen sowie ggf. einem oder mehreren Wirkstoffen durch Streichen, Sprühen, Tränken, Tauchen, Imprägnieren oder in sonstiger Art und Weise behandelt.

4. Holz oder holzhaltiges Material enthaltend Penthiopyrad.
